# EUROPEAN PATENT APPLICATION

(11) **EP 4 628 396 A1**
(43) Date of publication of application: **08.10.2025**
(21) Application number: 25168370.2
(22) Date of filing: 03.04.2025
(51) Int. Cl.: B62K 25/08, F16F 9/02, F16F 9/32, F16F 9/43

(54) **FRONT FORKS FOR BICYCLES**

(30) Priority: 04.04.2024 US 202463574640 P; 10.05.2024 US 202463645724 P; 08.12.2024 US 202463729452 P; 27.03.2025 US 202519092513
(71) Applicant: SRAM, LLC, Chicago, IL 60607 (US)
(72) Inventor: Dunlap, Charles, COLORADO SPRINGS, 80907 (US); Lynch, Timothy, COLORADO SPRINGS, 80907 (US); Maxwell, Michael, COLORADO SPRINGS, 80907 (US); Rosenberry, Alexander, COLORADO SPRINGS, 80907 (US); Watt, Jonathan, COLORADO SPRINGS, 80907 (US)
(74) Representative: Thum & Partner I Thum Mötsch Weickert Patentanwälte PartG mbB

(57) **Abstract**

Front forks for bicycles are described herein. An example front fork (200) includes a leg (204, 206) including an upper tube (210, 212) and a lower tube (214, 216). The upper tube (210, 212, 120, 2310) and the lower tube (214, 216) are configured in a telescopic arrangement. The upper tube (210, 212) and the lower tube (214, 216) define an interior region (312, 326) that is sealed and contains a volume of air in the lower tube (214, 216). The front fork (200) also includes a valve (384, 386) coupled to the upper tube (210, 212) at or near a top end of the upper tube (210, 212). A flow path is formed between the volume of air in the lower tube (214, 216) and the valve (384, 386) such that when the valve (384, 386) is opened, pressure in the lower tube (214, 216) is equalized with atmospheric pressure.

## Description

This application claims the benefit of U.S. Provisional Patent Application 63/574,640, filed April 4, 2024, U.S. Provisional Patent Application 63/645,724, filed May 10, 2024, and U.S. Provisional Patent Application 63/729,452, filed December 8, 2024, the contents of which are hereby incorporated by reference in their entirety.

### FIELD OF THE DISCLOSURE

This disclosure relates generally to bicycle components and, more specifically, to front forks for bicycles.

### BACKGROUND

Bicycles are known to have suspension components. Suspension components are used for various applications, such as cushioning impacts, vibrations, or other disturbances experienced by the bicycle and rider during use as well as maintaining ground contact for traction. A common application for suspension components on bicycles is cushioning impacts or vibrations experienced by the rider when the bicycle is ridden over bumps, ruts, rocks, potholes, and/or other obstacles. These suspension components include rear and/or front wheel suspension components. For example, some bicycles include a front fork with telescoping legs that incorporate a spring and/or damper system.

### SUMMARY

An example front fork for a bicycle includes a leg including an upper tube and a lower tube. The upper tube and the lower tube are configured in a telescopic arrangement. The upper tube and the lower tube define an interior region that is sealed and contains a volume of air in the lower tube. The front fork also includes a valve disposed in a flow path at or near a top end of the upper tube. The flow path is formed between the volume of air in the lower tube and the valve such that when the valve is opened, pressure in the lower tube is equalized with atmospheric pressure.

An example front fork for a bicycle includes a crown having a top side and a bottom side opposite the top side, a steerer tube coupled to the crown and extending outward from the top side, and a leg coupled to the crown and extending outward from the bottom side. The leg includes an upper tube and a lower tube. The upper tube is coupled to the crown. The upper tube extends into a top end of the lower tube. The upper tube and second lower tube define an interior region that is sealed and contains a volume of air in the lower tube. The front fork also includes a valve to equalize pressure of the volume of air in the lower tube with atmospheric pressure when the valve is opened. The valve has a manually operable portion that is above the top end of the lower tube in an orientation in which the upper tube is above the lower tube.

### BRIEF DESCRIPTION OF THE DRAWINGS

FIG. 1 is a side view of an example bicycle that can employ any of the example front forks disclosed herein.
FIG. 2 is a perspective view of an example front fork that can be implemented on the example bicycle of FIG. 1.
FIG. 3 is a cross-sectional view of the example front fork of FIG. 2.
FIG. 4 is a perspective view of a top of a crown of the example fork of FIG. 2 showing example valves for balancing pressure in the lower tube of the example fork.
FIG. 5 is an enlarged view of a callout in FIG. 3 showing an example valve for balancing pressure in the first leg.
FIG. 6 is an enlarged view of a callout in FIG. 3 showing an example valve for balancing pressure in the second leg.
FIG. 7 is a simplified schematic of the example second leg of the example front fork of FIG. 3 to illustrate an example flow path between an example spring body an example upper tube.
FIGS. 8A, 8B, and 8C are enlarged views of the callouts in FIG. 7.
FIG. 9 is a simplified schematic of the second leg showing an alternative flow path through an example center sleeve.
FIGS. 10A, 10B, and 10C are enlarged views of the callouts in FIG. 9.
FIG. 11 is a cross-sectional view of a top portion of the example second leg showing an alternative placement of the example valve on the side of the example upper tube.
FIG. 12 is a cross-sectional view of a top portion of the example second leg and the crown showing an alternative placement of the example valve on the crown.
FIG. 13 is a perspective view of a portion of the example front fork of FIG. 2 showing another example placement of the example valves on the example crown.
FIG. 14 is a cross-sectional view of the example front fork taken along line A-A of FIG. 13.
FIG. 15 is a top view of the example front fork of FIG. 13.
FIG. 16 is a cross-sectional view of the example front fork taken along line B-B of FIG. 15.
FIG. 17 is a side view of the example front fork of FIG. 13.
FIG. 18 is a cross-sectional view of the example front fork taken along line C-C of FIG. 17.
FIG. 19 is a cross-sectional view of a lower portion of the example second leg of the example front fork of FIGS. 2 and 3 with an example travel spacer in the example lower tube.
FIG. 20 is a perspective view of an example double clamp front fork that can be implemented on the example bicycle of FIG. 1 and which can incorporate any of the example vent designs disclosed herein.
FIG. 21 is a partial perspective view of another example front fork that can be implemented on the example bicycle of FIG. 1.
FIG. 22 is a cross-sectional view of the example front fork of FIG. 21 taken along line D-D in FIG. 21
FIG. 23 is an enlarged view of the cross-sectional view of FIG. 22.
FIG. 24 is a top view of the example front fork of FIG. 21.
FIG. 25 is a cross-sectional view of the example front fork of FIG. 21 taken along line E-E in FIG. 24
FIG. 26 is an enlarged view of the cross-sectional view of FIG. 25.

The figures are not to scale. Instead, the thickness of the layers or regions may be enlarged in the drawings. In general, the same reference numbers will be used throughout the drawing(s) and accompanying written description to refer to the same or like parts.

Descriptors "first," "second," "third," etc. are used herein when identifying multiple elements or components that may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Bicycles are known to have front forks that act as a suspension component. A front fork typically includes a crown and two legs extending downward from the crown. Each leg has an upper tube that is coupled to the crown and a lower tube that is to be connected to the front wheel. The upper and lower tubes are arranged in a telescopic relationship with the upper tubes fitting into a corresponding lower tube. In an embodiment the lower two tubes are formed of a one piece unitary member. For example, the lower tubes may be formed in a singular lower member through casting or machining processes. In some instances, a damper is disposed in one of the legs and a spring is disposed in the other leg. The damper and spring are sealed systems within the interior of the legs.

The upper tube and the lower tube of each leg define an interior region that is sealed. In particular, the top end of the upper tube is sealed, the bottom end of the lower tube is sealed, and a wiper seal is disposed between the upper and lower tubes. This helps to keep outside contaminants (e.g., dirt, debris) from entering the interior region of the leg, as well as help retain oil or other lubricant (e.g., grease) in the interior region. Therefore, a volume of air is contained within the sealed interior region and, specifically, within the lower tube. This air is separate or isolated from the fluid in the damper or spring systems. This region is sometimes referred to as the casting volume. The air sealed in the interior region in the lower tube is typically at atmospheric pressure. When the front fork is compressed, the upper tube is pushed into the lower tube, which decreases the volume in the lower tube. This causes an increase in pressure of the air in the lower tube. This increased pressure acts as an air spring that applies force to expand the upper and lower tubes back to their original positions. This pressure induced force is in addition to the spring and damper rates of the spring and damper systems. This pressure induced force is often small compared to the spring force provided the primary spring, but is accounted for in the overall design and tuning of the spring and damper systems. Further, while this pressure induced force may be less significant on smaller diameter tubes with less travel (e.g., 32 millimeter (mm) diameter tubes with 130 mm of travel), the pressure induced force is much more significant on larger diameter tubes with greater travel (e.g., 35-40 mm diameter tubes with 140-200 mm of travel) because of the larger cross-sectional area and longer stroke into the lower tube volume.

The pressure in the interior region is susceptible to change based on changes in altitude and/or temperature. For example, if a rider takes their bicycle from the bottom of a mountain to the top of the mountain, the atmospheric pressure and temperature is lower than at the bottom of the mountain, and vice versa. This change in altitude and/or pressure can cause a change in the pressure in the sealed interior region of the leg, which can result in an increase pressure or a vacuum in the lower tube. Further, as modern suspension systems continue to use larger diameter telescoping tubes, these telescoping tubes have additional pressure induced forces acting on them. These additional pressure induced forces change the dynamics of the front fork and, thus, are undesirable to the user. For example, an additional pressure in the lower tube can increase the overall spring force of the front fork, as well as create a higher breakaway force needed to compress the fork. Therefore, there is a reason to minimize differential pressures between the sealed interior region of the lower tube and the atmosphere while sealing oil in and contaminants out. Some front forks include a relief or vent valve on the side of the lower tube near the bottom. This is common on right side up forks where the lower tube is the larger diameter tube and the upper tube is the smaller diameter tube. The valve can be opened to equalize or balance the pressure of the air within the lower tube with the atmospheric pressure. However, this placement of the valve on the lower tube is often difficult for a user to reach. Further, this placement of the valve is often relatively close to the oil in the bottom of the lower tube and, therefore, some of the oil may be ejected from the valve when it is open. Moreover, the lower tube is often a cast part or component, and incorporating the valve components into the casting is often expensive and complex.

Disclosed herein are example front forks with a relief or vent valve that is above or outside of the lower tube. For example, disclosed herein are examples in which the valve is coupled to the upper tube, such as at or near the top end of the upper tube (e.g., in a cap on the top end of the upper tube, on a side of the upper tube), on a crown, and/or elsewhere above the lower tube. As such, the valve is not on the lower tube as in known designs. This placement of the valve above the lower tube is much easier to reach for a user, because the valve is much higher on the front fork. Further, this placement of the valve reduces or eliminates the chance of accidentally ejecting oil from the valve when opened because the valve is further from the oil level in the bottom of the lower tube. Also, this placement eliminates the valve casting problems on the lower tube as noted above.

The example front forks disclosed herein define a flow path from the sealed air volume in the lower tube to the valve that is at or near the top of the upper tube. This flow path enables the air pressure in the lower tube to be equalized or balanced (e.g., increased, decreased) with atmospheric pressure when the valve is opened. In some examples disclosed herein, the front fork includes a damper body or spring body in the leg, which is a separate sealed system from the air in the interior region of the lower tube. The damper body or spring body has a smaller diameter than the inside of the upper tube. As such, a gap or space is formed between the damper body or spring body and the upper tube. This gap or space forms a portion of the flow path that allows fluid communication between the air in the lower tube and the valve that is at or near the top end of the upper tube.

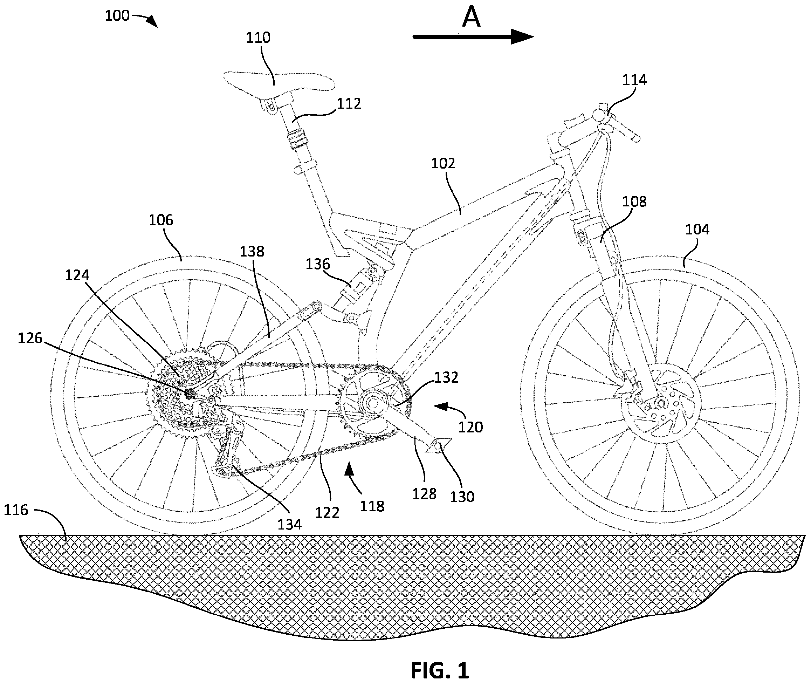

Turning now to the figures, FIG. 1 illustrates one example of a human powered vehicle on which the example front forks disclosed herein may be implemented. In this example, the vehicle is one possible type of bicycle 100, such as a mountain bicycle. In the illustrated example, the bicycle 100 includes a frame 102 and a front wheel 104 and a rear wheel 106 rotatably coupled to the frame 102. In the illustrated example, the front wheel 104 is coupled to the front end of the frame 102 via a front fork 108. A front and/or forward riding direction or orientation of the bicycle 100 is indicated by the direction of the arrow A in FIG. 1. As such, a forward direction of movement for the bicycle 100 is indicated by the direction of arrow A.

In the illustrated example of FIG. 1, the bicycle 100 includes a seat 110 coupled to the frame 102 (e.g., near the rear end of the frame 102 relative to the forward direction A) via a seat post 112. The bicycle 100 also includes handlebars 114 coupled to the front fork 108 (e.g., near a forward end of the frame 102 relative to the forward direction A) for steering the bicycle 100. The bicycle 100 is shown on a riding surface 116. The riding surface 116 may be any riding surface such as the ground (e.g., a dirt path, a sidewalk, a street, etc.), a man-made structure above the ground (e.g., a wooden ramp), and/or any other surface.

In the illustrated example, the bicycle 100 has a drivetrain 118 that includes a crank assembly 120. The crank assembly 120 is operatively coupled via a chain 122 to a sprocket assembly 124 mounted to a hub 126 of the rear wheel 106. The crank assembly 120 includes at least one, and typically two, crank arms 128 and pedals 130, along with at least one front sprocket, or chainring 132. A rear gear change device 134, such as a derailleur, is disposed at the rear wheel 106 to move the chain 122 through different sprockets of the sprocket assembly 124. Additionally or alternatively, the bicycle 100 may include a front gear change device to move the chain 122 through gears on the chainring 132.

The example bicycle 100 includes a suspension system having one or more suspension components. In this example, the front fork 108 is implemented as a front suspension component. The front fork 108 is or integrates a shock absorber that includes a spring and a damper, disclosed in further detail herein. Further, in the illustrated example, the bicycle 100 includes a rear suspension component 136, which is a shock absorber, referred to herein as the rear shock absorber 136. The rear shock absorber 136 is coupled between two portions of the frame 102, including a swing arm 138 coupled to the rear wheel 106. The front fork 108 and the rear shock absorber 136 absorb shocks and vibrations while riding the bicycle 100 (e.g., when riding over rough terrain). In other examples, the front fork 108 and/or the rear shock absorber 136 may be integrated into the bicycle 100 in other configurations or arrangements. Further, in other examples, the suspension system may employ only one suspension component (e.g., only the front fork 108) or more than two suspension components (e.g., an additional suspension component on the seat post 112) in addition to or as an alternative to the front fork 108 and rear shock absorber 136.

While the example bicycle 100 depicted in FIG. 1 is a type of mountain bicycle, the example front forks disclosed herein can be implemented on other types of bicycles. For example, the disclosed front forks may be used on road bicycles, as well as bicycles with mechanical (e.g., cable, hydraulic, pneumatic, etc.) and nonmechanical (e.g., wired, wireless) drive systems. The disclosed front forks can also be implemented on other types of two-wheeled, three-wheeled, and four-wheeled human powered vehicles. Further, the example front forks can be used on other types of vehicles, such as motorized vehicles (e.g., a motorcycle, a car, a truck, etc.).

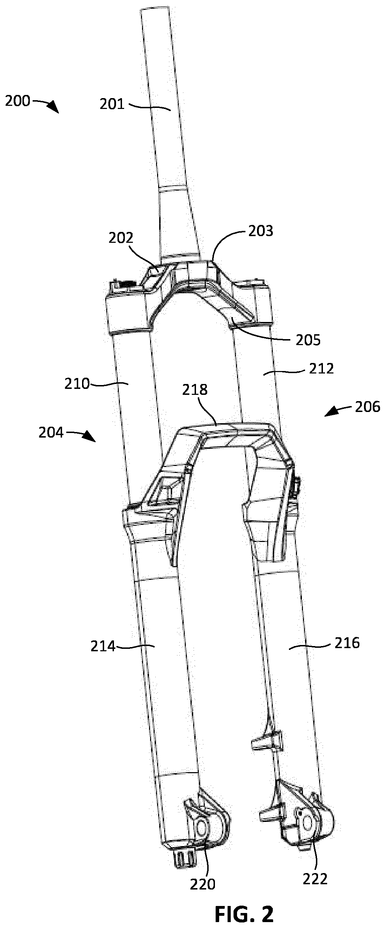

FIG. 2 is a perspective view of an example front fork 200 (a suspension component) that can be implemented as the front fork 108 on the bicycle 100 of FIG. 1. In the illustrated example of FIG. 2, the front fork 200 includes a steerer tube 201, a crown 202, a first leg 204, and a second leg 206. The crown 202 has a top side 203 and a bottom side 205 opposite the top side 203. The steerer tube 201 is coupled to the crown 202 and extends outward (e.g., upward) from the top side 203 of the crown 202. The steerer tube 201 is to be inserted through a neck tube on the frame 102 (FIG. 1) of the bicycle and coupled to the handlebars 114. The steerer tube 201 can be tapered or straight. In some examples, the steerer tube 201 is constructed of aluminum or carbon fiber, but can be constructed of other materials in other examples. The first and second legs 204, 206 are coupled to the crown 202 and extend outward (e.g., downward) from the bottom side 205 of the crown 202. The first and second legs 204, 206 are to be coupled to the front wheel 104 (FIG. 1). The fork configuration shown in FIG. 2 is often referred to as a single crown fork.

In the illustrated example, the first and second legs 204, 206 include first and second upper tubes 210, 212, respectively, and first and second lower tubes 214, 216, respectively. The upper and lower tubes 210, 212, 214, 216 are sometimes referred to as stanchions or leg portions. The first and second upper tubes 210, 212 are coupled to the crown 202. The front fork 200 includes an arch 218 (sometimes referred to as a fork brace or stabilizer) coupled between the lower tubes 214, 216. In some instances, the upper tubes 210, 212 are referred to as an upper tube assembly, while the lower tubes 214, 216 and the arch 218 are referred to as a lower tube assembly. In some examples, the lower (including lower tubes 214, 216 and the arch 218) are constructed as a one-piece lower, which may be formed through casting (e.g., from metal such as aluminum), a one-piece carbon fiber structure, or may be constructed as separate tubes 214, 216 that are coupled together (e.g., via welding, via threaded fasteners, etc.). The first and second lower tubes 214, 216 include respective front wheel attachment portions 220, 222, such as holes (e.g., eyelets) or dropouts, for attaching the front wheel 104 (FIG. 1) to the front fork 200.

The inside diameter of the lower tubes is larger than the outside diameter of a corresponding one of the upper tubes. The first and second upper tubes 210, 212 are slidably received within the respective first and second lower tubes 214, 216. Thus, the first and second upper tubes 210, 212 form a telescopic arrangement with the respective first and second lower tubes 214, 216. During a compression stroke, the first and second upper tubes 210, 212 move into or toward the respective first and second lower tubes 214, 216, and during a rebound stroke, the first and second upper tubes 210, 212 move out of or away from the respective first and second lower tubes 214, 216.

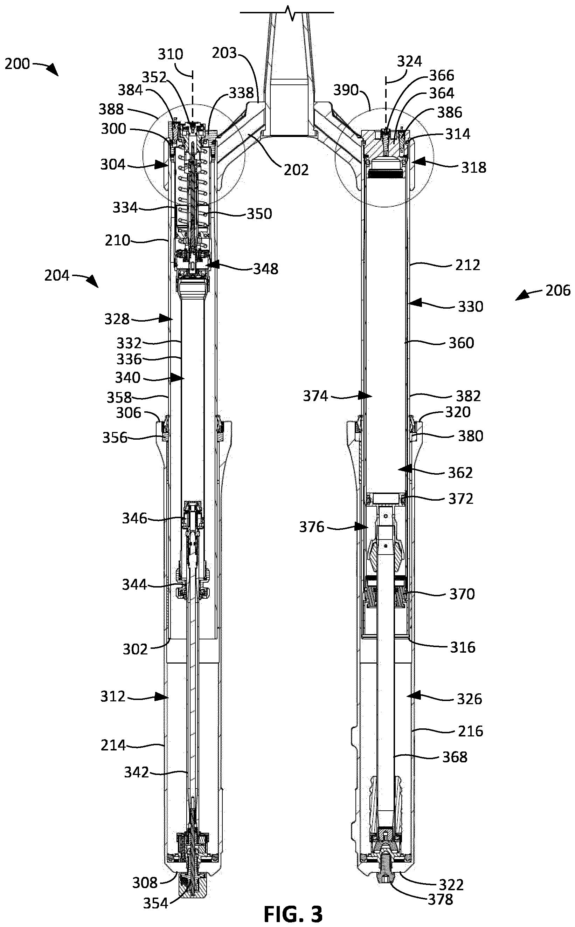

FIG. 3 is a cross-sectional view of the example front fork 200. As shown in FIG. 3, the first upper tube 210 has a first end 300, referred to herein as a top end 300, and a second end 302, referred to herein as a bottom end 302, opposite the top end 300. The top end 300 and/or otherwise a top portion of the first upper tube 210 is coupled to the crown 202. In the illustrated example, a portion of the first upper tube 210 extends into an opening 304 in the crown 202. In some examples, the first upper tube 210 is friction fit in the opening 304. Additionally or alternatively, the first upper tube 210 can be coupled to the crown 202 via another mechanical and/or chemical fastening technique (e.g., threaded fasteners, welding, an adhesive, etc.). The first lower tube 214 has a first end 306, referred to herein as a top end 306, and a second end 308, referred to herein as a bottom end 308, opposite the top end 306. The first upper tube 210 is inserted into the first lower tube 214. In particular, the bottom end 302 of the first upper tube 210 is disposed within the first lower tube 214. This type of configuration is sometimes referred to as a right side up fork. The top end 300 of the first upper tube 210 and the bottom end 308 of the first lower tube 214 form first and second distal ends of the suspension component. During compression, the top end 300 and the bottom end 308 are moved toward each other, and during extension or rebound, the top end 300 and the bottom end 306 are moved away from each other. Thus, the first upper and lower tubes 210, 214 form a telescopic arrangement and move along a central axis 310 of the first leg 204. The first upper and lower tubes 210, 214 define an interior chamber or region 312 that is sealed, as disclosed in further detail herein.

The second upper and lower tubes 212, 216 are similarly arranged. In particular, the second upper tube 210 has a first end 314, referred to herein as a top end 314, and a second end 316, referred to herein as a bottom end 316, opposite the top end 314. The top end 314 is coupled to the crown 202. In the illustrated example, a portion of the second upper tube 212 extends into an opening 318 in the crown 202. In some examples, the second upper tube 212 is friction fit in the opening 318. Additionally or alternatively, the second upper tube 212 can be coupled to the crown 202 via another mechanical and/or chemical fastening technique (e.g., threaded fasteners, welding, an adhesive, etc.). The second lower tube 216 has a first end 320, referred to herein as a top end 320, and a second end 322, referred to herein as a bottom end 322, opposite the top end 320. The second upper tube 212 is inserted into the second lower tube 216. In particular, the bottom end 316 of the second upper tube 212 is disposed within the second lower tube 216. The second upper and lower tubes 212, 216 form a telescopic arrangement and move along a central axis 324 of the second leg 206. The second upper and lower tubes 212, 216 define an interior chamber or region 326 that is sealed, as disclosed in further detail herein.

The front fork 200 includes both a damper 328 and a spring 330. In the illustrated example, the damper 328 is disposed in the first leg 204, and the spring 330 is disposed in the second leg 206. In this example, the spring 244 is implemented as an air spring, but can also be implemented as a coil spring in other examples. The damper 328 is configured to limit the speed at which the compression/extension occurs and/or otherwise absorb vibrations. The spring 330 is configured to resist compression of the top ends 300, 314 toward the bottom ends 308, 322 and return the tubes 210, 212, 214, 216 to the extended position after compression occurs.

In the illustrated example, the damper 328 includes a damper body 332 (e.g., one or more cylinders) including a first portion 334 and a second portion 336. The damper body 332 is disposed in and coupled to the first upper tube 210. In particular, the damper 328 includes a first cap 338. The first portion 334 of the damper body 332 is coupled (e.g., threadably coupled) to and extends downward from the first cap 338. The first cap 338 is also coupled (e.g., threadably coupled) to the first end 300 of the first upper tube 210. As such, the damper body 332 is coupled to and disposed in a fixed position in the first upper tube 210.

The second portion 336 of the damper body 332 defines a sealed chamber 340 (e.g., a hydraulic chamber). The chamber 340 is filled with fluid. The fluid may be, for example, oil, such as a mineral oil based damping fluid. In other examples, other types of damping fluids may be used (e.g., silicone or glycol type fluids). The damper 328 includes a first shaft 342 (which may be referred to as a damper or piston shaft, rod, or stem). The first shaft 342 is coupled to and extends upward from the bottom end 308 of the first lower tube 214. The first shaft 342 extends through a bottom sealhead 344 on the damper body 332 and into the chamber 340. The damper 328 includes a damper member 346 (which may also be referred to as a piston or mid-valve) disposed in the chamber 340 of the second portion 336 of the damper body 332. The damper member 346 is coupled to the first shaft 342 and is slidable in the second portion 336 of the damper body 332. The damper member 346 divides the chamber 340 into two chambers (above and below the damper member 346). When the front fork 200 compresses and the ends of the first upper and lower tubes 210, 214 move toward each other, such as when riding over a bump, the first shaft 342 moves the damper member 346 upward in the chamber 340 toward the top end 300 of the first upper tube 210. During rebound, the damper member 346 moves downward in the chamber 340 away from the top end 300 of the first upper tube 210. The damper member 346 includes one or more channels that enable fluid to flow across the damper member 346, at a restricted rate, between the first and second chambers. In some examples, a portion of the fluid from the upper chamber flows into a reservoir 348 in the damper body 332. The first portion 333 of the damper body 332 contains a spring 350 that applies pressure to the reservoir 348. In the illustrated example, the damper 328 includes an adjustment knob 352 that can be used to adjust the damping rate of the damper 328. The adjustment knob 352 is on a top of the first cap 338. In some examples, the adjustment knob 352 includes two adjustors, one for high-speed compression damping and one for low-speed compression damping. The adjustment knob 352 can be accessed by a user or rider and adjusted (e.g., pushed, twisted, etc.) to affect the damping rate.

The interior region 312 of the first leg 204 is sealed. In particular, the interior region 312 contains a volume of air in the first lower tube 214 that is sealed or isolated from the outside atmosphere. For example, the top end 300 of the first upper tube 210 is sealed by the first cap 338 and the bottom end 308 is sealed by a thread fastener 354 (which couples the first shaft 342 to the bottom end 308). Further, the front fork 200 includes a wiper seal 356 that is coupled to the first lower tube 214 near the top end 306. The wiper seal 356 slides along an outer surface 358 of the first upper tube 210 as the front fork 200 compresses or rebounds. The wiper seal 356 forms a fluid tight seal between the first upper and lower tubes 210, 214. As such, the air in the interior region 312 is sealed from the outside environment. This helps to shield the internals from outside contaminants (e.g., dirt, debris, etc.). This also helps to maintain oil or other lubricant in the interior region 312. The air in the interior region 312 is isolated or separate from the fluid (e.g., oil) in the chamber 340.

In the illustrated example, the spring 330 includes a spring body 360 defining a sealed chamber 362 (e.g., a pneumatic chamber). The spring body 360 is disposed in and coupled to the second upper tube 212. In particular, the spring 330 includes a second cap 364 coupled (e.g., threadably coupled) to a top of the spring body 360. Further, the second cap 364 is coupled (e.g., threadably coupled) to the top end 314 of the second upper tube 212. As such, the spring body 360 is coupled to and disposed in a fixed position in the second upper tube 212. The second cap 364 includes a valve 366 that can be used to fill the chamber 362 with fluid (e.g., compressed air).

The spring 330 includes a second shaft 368 (which may also be referred to as a spring or piston shaft, rod, or stem). The second shaft 368 is coupled to and extends upward from the bottom end 322 of the second lower tube 216. The second shaft 368 extends into the spring body 360. In particular, the second shaft 368 extends through a sealhead 370 in the spring body 360 and into the chamber 362. The spring 330 includes a piston 372 in the chamber 362 in the spring body 360. The piston 372 is coupled to the second shaft 368 and is slidable within the spring body 360. In some examples, a seal is disposed around the piston 372, which creates a seal between the piston 372 and the inner surface of the spring body 360. The piston 372 divides the chamber 362 into a first chamber 374 and a second chamber 376. In some examples, the first chamber 374 is filled with a mass of a pneumatic fluid (e.g., a gas, such as air) having a higher pressure than ambient pressure. Therefore, in this example, the first chamber 374 forms a pressurized chamber (sometimes referred to as a highly pressurized zone or positive spring chamber). In some examples, the second chamber 376 forms a negative spring chamber below the piston 372. When the front fork 200 compresses and the ends of the second upper and lower tubes 212, 216 move toward each other, such as when riding over a bump, the second shaft 368 moves the piston 372 toward the top end 314 of the second upper tube 212. As a result, the volume of the first chamber 374 decreases and, thus, the pressure of the fluid within the first chamber 374 increases. Conversely, the volume of the second chamber 376 increases and therefore the pressure of the fluid in the second chamber 376 decreases. After the compressive force is removed, the increased pressure in the first chamber 374 and the decreased pressure in the second chamber 376 acts to move the piston 372 away from the top end 314, which pushes the ends of the second upper and lower tubes 212, 214 away from each other, thereby acting as a spring to return the front fork 200 to its original or riding set up. The first upper and lower tubes 210, 214 similarly follow this motion.

While the example front fork 200 of FIGS. 2 and 3 includes two legs, in other examples, the front fork 200 can be configured as a single-side fork that only includes one of the legs. In such an example, the single leg may include a damper, a spring, or a combination spring and damper.

Similar to the interior region 312 of the first leg 204, the interior region 326 of the second leg 206 is sealed or isolated from the outside environment. For example, the top end 314 of the second upper tube 212 is sealed by the second cap 364 and the bottom end 322 is sealed by a thread fastener 378 (which couples the second shaft 368 to the bottom end 322). Further, the front fork 200 includes a wiper seal 380 that is coupled to the second lower tube 216 near the top end 320. The wiper seal 380 slides along an outer surface 382 of the second upper tube 212 as the front fork 200 compresses or rebounds. The wiper seal 380 forms a fluid tight seal between the second upper and lower tubes 212, 216. As such, the air in the interior region 326 is sealed from the outside environment. This helps to shield the internals from outside dirt or debris. This also helps to maintain oil or other lubricant in the interior region 326. The air in the interior region 326 is isolated or separate from the fluid in the chamber 362 of the spring 330.

As disclosed above, the interior regions 312, 326 of the first and second legs 204, 206 are sealed to keep out contaminants while keeping in oil. The air in these interior regions 312, 326 is typically at or close to atmospheric pressure. During a compression event, the volumes of the interior regions 312, 326 decrease, which increases the pressure in the interior regions 312, 326. This increased pressure acts as a small air spring that biases or forces the front fork 200 to the expanded position. This spring pressure is often small and accounted for in the design of the spring and damper system.

However, the pressure in the interior regions 312, 326 can change based on changes in altitude and/or temperature. For example, if a rider make takes the bicycle up to the top of a mountain or hill, the atmospheric pressure and temperature is lower than at the bottom of the mountain or hill. This change in altitude can cause a change in the pressure in the interior regions 312, 326, which affects the pressure induced forces provided the air in the interior regions 312, 326. This change in force is undesired by riders because it changes the spring and damping performance of the front fork 200.

To equalize the pressure in the interior regions 312, 326 with the atmospheric pressure, the front fork 200 includes first and second valves 384, 386 for the first and second legs 204, 206, respectively. In this example, the first and second valves 384, 386 are coupled to or integrated into the first and second caps 338, 364, respectively. The first and second valves 384, 386 can be opened to relieve/vent pressure or add pressure into the interior regions 312, 326. The first and second valves 384, 386 may also be referred to as relief or vent valves. While in this example the valves 384, 386 are coupled to the caps 338, 364, in other examples, the valves 384, 386 can be disposed in other locations. In some examples, the valves 384, 386 can be disposed or placed anywhere on the front fork 200 above the top ends 306, 320 (or the wiper seals 356, 380) of the lower tubes 214, 216 (in an orientation in which the upper tubes 210, 212 are above the lower tubes 214, 216) . For example, the valves 384, 386 may be on the sides of the upper tubes 210, 212 or on the crown 202. Examples of these other locations are disclosed in further detail herein. Further, the valves 384, 386 have manually operable portions, which are the portions of the valves 384, 386 that are interacted with (e.g., pressed, turned, etc.) by a user to open the valves 384, 386 and equalize the pressure. For example, as disclosed in further detail herein, the valves 384, 386 may be poppet valves that have poppet stems that can be pressed to open the valves 384, 386. In some examples, the manually operable portions of the valves 384, 386 can be disposed or placed anywhere on the front fork 200 above the top ends 306, 320 (or the wiper seals 356, 380) of the lower tubes 214, 216 (in an orientation in which the upper tubes 210, 212 are above the lower tubes 214, 216). Therefore, a portion of the valves 384, 386 can be located or formed within the tubes (e.g., in the lower tubes 214, 216) while the manually operable portions are still accessible at a higher location such as on the upper tubes 210, 212 or on the crown 202.

In some examples, the first and second valves 384, 386 are manually operated valves. For example, the first and second valves 384, 386 may be poppet valves (e.g., Schrader valves) that can be opened by a user by pressing on the valves 384, 386 (e.g., pressing on a poppet stem or actuator button). In other examples, the valves 384, 386 may be threaded fasteners (e.g., bolts) that are screwed into threaded ports. A user can open the valves 384, 386 by unscrewing the threaded fasteners. In some example, a tool may be needed to open and close the valves 384, 386. In other examples, the valves 384, 386 can be implemented as other types of manually operated valves. Additionally or alternatively, the valves 384, 386 can be automatically operated (e.g., opened, closed) by an actuator (e.g., a motor, a solenoid). The valves 384, 386 can be automatically operated based on a system condition, pressure, vacuum, time duration, orientation, applied force, temperature, etc.

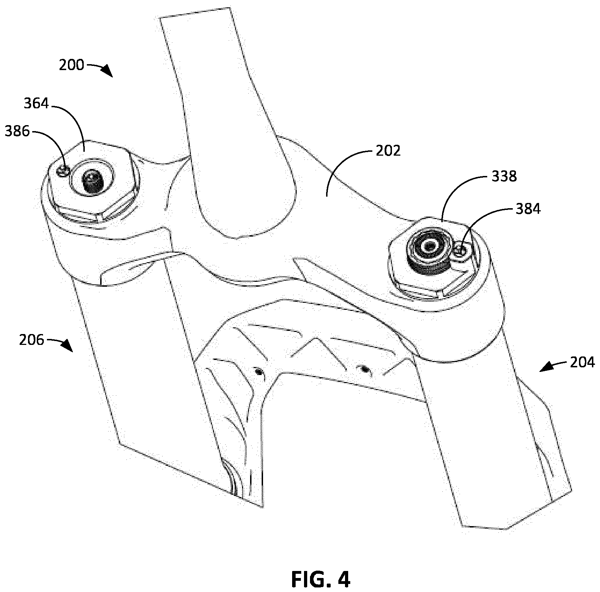

FIG. 4 is a perspective view of a top of the crown 202. As shown in FIG. 4, the first valve 384 is coupled to the first cap 338 on the top of the first leg 204 and the second valve 386 is coupled to the second cap 364 on the top of the second leg 206. A rider can easily access these valves 384, 386 at this higher location. When the first valve 384 is opened, the air pressure in the interior region 312 equalizes or balances with the atmospheric pressure within a few seconds. Similarly, when the second valve 386 is opened, the air pressure in the interior region 326 equalizes or balances with the atmospheric pressure within a few seconds. Therefore, a user only may open the valves 384, 386 for a few seconds to equalize the pressure. The user can open both valves 384, 386 at the same time or at different times. In some examples, a user may open the valves 384, 386 when the front fork 200 is fully expanded. In other examples, the user can open and close the valves 384, 386 when partially compressed to seal a certain amount of air in the lower tubes 214, 216.

Referring back to FIG. 3, the outside of the damper body 332 is spaced from the inside of the first upper tube 210. In particular, an outer diameter of the damper body 332 is less than an inner diameter of the first upper tube 210. This enables air in the first lower tube 214 to flow up to the top of the first leg 204, and vice versa. The first valve 384 is coupled to the first cap 338 and exposed to the air in the space between the damper body 332 and the first upper tube 210. Therefore, when the first valve 384 is opened, air can flow between the damper body 332 and the inside of the first upper tube 210 and thereby equalize the pressure in the first lower tube 214 with the atmospheric air. Similarly, the outside of the spring body 360 is spaced from inside of the second upper tube 212. In particular, an outer diameter of the spring body 360 is les than an inner diameter of the second upper tube 212. This enables fluid communication between the air in the second lower tube 216 and the second valve 386. Therefore, when the second valve 386 is opened, air can flow between the spring body 360 and the inside of the second upper tube 212 and thereby equalize the pressure in the second lower tube 216.

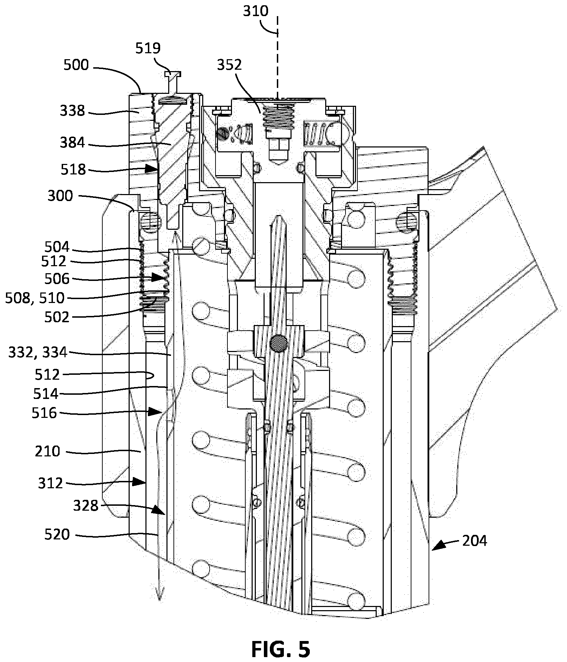

FIG. 5 is an enlarged view of the callout 388 of FIG. 3 showing the first cap 338 and the first valve 384. The first cap 338 has a first side 500 (e.g., a top side), a second side 502 (e.g., a bottom side) opposite the first side 500, and an outer surface 504 between the first and second sides 500, 502. In this example, the first portion 334 of the damper body 332 is threadably coupled to the first cap 338. In particular, the second side 502 of the first cap 338 has a bore 506 with a threaded inner surface 508. An outer surface 510 of the damper body 232 has threads that are screwed into the threads on the threaded inner surface 508 of the bore 506 of the first cap 338.

In the illustrated example, the first cap 338 is threadably coupled to the top end 300 of the first upper tube 210. In particular, the outer surface 504 of the first cap 338 has threads that are screwed into threads on an inner surface 512 of the first upper tube 210. As shown in FIG. 5, a gap or space is formed between the inner surface 512 of the first upper tube 210 and an outer surface 514 of the damper body 332 that forms a portion of the interior region 312. The first portion 334 of the damper body 332 has a radial opening 516. In some examples, the first portion 334 may include multiple radial openings. As such, air in the interior region 312 also fills the first portion 334 of the damper body 332.

As shown in FIG. 5, the first cap 338 has an opening 518 (e.g., a fluid passageway) extending between the first side 500 and the bore 506 on the second side 502. The first valve 384 is disposed in and controls the flow of air through the opening 518. In this example, the first valve 384 is a poppet valve, such as a Schrader valve. When the first valve 384 is closed, the first valve 384 blocks or prevents air flow through the opening 518. When the first valve 384 is opened, such as by pressing on a stem 519 (a manually operable portion) on a the top of the first valve 384, the first valve 384 allows air flow through the opening 518. As such, when the first valve 384 is opened, air can flow along a flow path 520 between the interior region 312 and the outside atmosphere, which enables the air in the first lower tube 214 (FIG. 3) to be equalized with the atmospheric air. For example, if the interior region 312 is over-pressurized (e.g., above atmospheric pressure), when the first valve 384 is opened, air flows along the flow path 520 from the inside of the first lower tube 214 (FIG. 3), along the gap between the first upper tube 210 and the damper body 332, through the radial opening 516, through the first portion 334 of the damper body 332, and through the opening 518 to the atmosphere. Therefore, the flow path 520 is at least partially formed by the gap or space (e.g., an annular volume) between the damper body 332 and the first upper tube 210, at least partially formed by the first portion 334 of the damper body 332 and the radial opening 516. Conversely, if the interior region 312 is under-pressurized (e.g., below atmospheric pressure), when the first valve 384 is opened, air flows from the atmosphere and into the interior region 312 in the reverse direction. Therefore, the first valve 384 is disposed in the flow path 520 and can control venting/equalization of the air in the first lower tube 214 with atmospheric pressure.

In the illustrated example, the damper 328 includes the adjustment knob 352. The adjustment knob 352 is positioned along the central axis 310 of the first leg 204. Therefore, the first valve 384 and the opening 518 are positioned in a region that is offset from the central axis 310. In other examples, if the damper 228 does not include an adjustment knob (or the adjustment knob is disposed in another location), the first valve 384 can be aligned along the central axis 310 of the first leg 204.

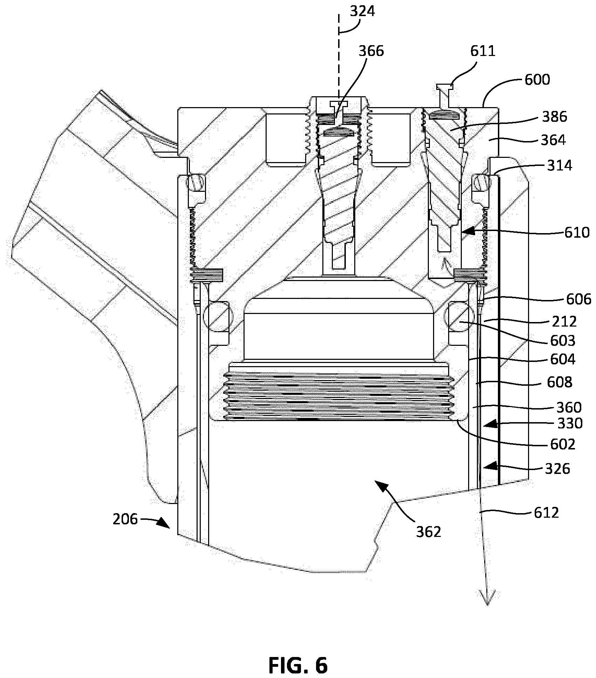

FIG. 6 is an enlarged view of the callout 390 of FIG. 3 showing the second cap 364 and the second valve 386. The second cap 364 has a first side 600 (e.g., a top side), a second side 602 (e.g., a bottom side) opposite the first side 600, and an outer surface 604 between the first and second sides 600, 602. The spring body 360 is coupled to the second cap 364. In this example, a portion of the spring body 360 is disposed around and, in some examples, in contact with the outer surface 604 of the second cap 364. In some examples, the spring body 360 is coupled to the second cap 364 via interference fit (sometimes referred to as a friction fit) against a seal 603 (e.g., an o-ring) on the second cap 364. In other examples, the spring body 360 can be coupled to the second cap 364 via other mechanical and/or chemical techniques (e.g., threaded connection, an adhesive, welding, etc.).

In the illustrated example, the second cap 364 is threadably coupled to the top end 314 of the second upper tube 212. In particular, the outer surface 604 of the second cap 364 has threads that are screwed into threads on an inner surface 606 of the second upper tube 212. The spring body 360 has an outer diameter that is smaller than the inside of the second upper tube 212. As such, as shown in FIG. 6, a gap or space is formed between the inner surface 606 of the second upper tube 212 and an outer surface 608 of the spring body 360 that forms a portion of the interior region 326.

As shown in FIG. 6, the second cap 364 has an opening 610 (e.g., a fluid passageway) extending between the first side 600 and the outer surface 604. The second valve 386 is disposed in and controls the flow of air through the opening 610. In this example, the second valve 386 is a poppet valve, such as a Schrader valve. When the second valve 386 is closed, the second valve 386 blocks or prevents air flow through the opening 610. When the second valve 386 is opened, such as by pressing on a stem 611 (a manually operable portion) on a the top of the second valve 386, the second valve 386 allows air flow through the opening 610. As such, when the second valve 386 is opened, air can flow along a flow path 612 between the interior region 326 and the outside atmosphere, which enables the air pressure in the second lower tube 216 (FIG. 3) to be equalized with the atmospheric pressure. For example, if the interior region 326 is over-pressurized (e.g., above atmospheric pressure), when the second valve 386 is opened, air flows along the flow path 612 from the inside of the second lower tube 216 (FIG. 3), along the gap between the second upper tube 212 and the spring body 360, and through the opening 610 to the atmosphere. Therefore, the flow path 612 is at least partially formed by the gap or space between the spring body 360 and the second upper tube 212. Conversely, if the interior region 326 is under-pressurized (e.g., below atmospheric pressure), when the second valve 386 is opened, air flows from the atmosphere and into the interior region 326 in the reverse direction.

In the illustrated example, the spring 330 includes the valve 366 for filling the chamber 362. The valve 366 is positioned along the central axis 324 of the second leg 206. Therefore, the second valve 386 and the opening 610 are positioned in a region that is offset from the central axis 324. In other examples, if the spring 330 does not include a fill valve (or the fill valve is disposed in another location), the second valve 386 can be aligned along the central axis 324 of the second leg 206.

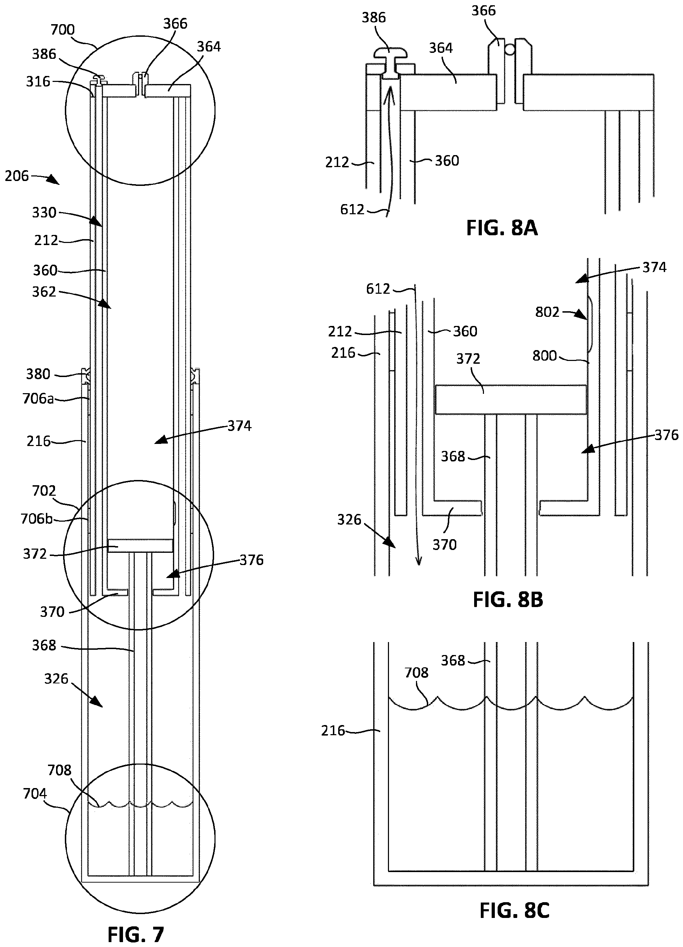

FIG. 7 is a simplified schematic of the second leg 206 with the spring 330. FIGS. 8A, 8B, and 8C are enlarged views of the callouts 700, 702, 704, respectively, of FIG. 7. The second upper tube 212 is inserted into the second lower tube 216. In the illustrated example, the second leg 206 includes two bushings 706a, 706b in the second upper tube 212. The bushings 706a, 706b help to align the tubes 212, 214 and enable the tubes 212, 214 to slide smoothly relative to each other. As shown in FIGS. 7 and 8C, the second leg 206 contains an amount of oil 708 in the bottom of the second lower tube 216. When the second leg 206 is compressed, the second upper tube 212 dips into the oil, and when the second leg 206 rebounds or expands, the second upper tube 212 distributes the oil to the bushings 706a, 706b. As disclosed herein, the interior region 326 is sealed. In particular, the top end 314 of the second leg 206 is sealed by the second cap 364, and the wiper seal 380 forms a seal between the second upper tube 212 and the second lower tube 216. As such, the interior region 326 formed inside the second lower tube 216 and the second upper tube 212 is sealed, which prevents dirt or debris from entering the interior region 326 and helps to contain the oil 708 that is collected in the bottom of the second leg 206.

The spring body 360 is coupled to and extends downward from the second cap 364. The spring body 360 forms the sealed chamber 362. The top of the chamber 362 is sealed by the second cap 364. The second shaft 368 extends through the sealhead 370, which seals the bottom of the chamber 362. The piston 372 is coupled to the second shaft 368 and slidable up and down in the chamber 362. In some examples, the piston 372 is sealed against the inner surface of the spring body 360 to separate the chamber 362 into the first chamber 374 (positive chamber) and the second chamber 376 (negative chamber). The fill valve 366 can be used to fill the chamber 362 with pressurized gas. In some examples, the spring 330 can include an air bypass feature to enable air (or other fluid in the spring 330) in the first and second chambers 374, 376 to equalize during and/or after a compression/rebound stroke. For example, as shown in FIG. 8B, an inner surface 800 of the spring body 360 has a groove 802, which enables air to bypass the piston 252 during compression or rebound. In particular, when the piston 372 passes the groove 802 (during compression or rebound), air in the first and/or second chambers 374, 376 can bypass the piston 372, thereby equalizing the pressure in the first chamber 374 (the positive chamber) and the second chamber 376 (the negative chamber).

In this example, the spring chamber 362 is formed or defined by the spring body 360, not the second upper tube 212 itself. This enables a flow path to be formed through the second upper tube 212. In particular, as shown in FIG. 7, the spring body 360 has a smaller diameter than the second upper tube 212. As such, a gap or space is formed between the spring body 360 and the second upper tube 212. This gap or space between the spring body 360 and the second upper tube 212 forms the flow path 612 (FIGS. 8A and 8B) between the air in the second lower tube 216 and the second valve 386 at the top of the second leg 206. Therefore, when the second valve 386 is opened, air can flow between the interior region 326 of the second lower tube 216 and the second valve 386, as shown by the air flow path 612 in FIGS. 8A and 8C, which equalizes the pressure between the second lower tube 216 and the atmosphere. The second valve 386 can be opened manually (e.g., by a user pressing on the second valve 386) or automatically (e.g., by activating an actuator or solenoid). The example design valve placement illustrated in connection with FIGS. 7 and 8A-8C can also be implemented on the first leg 204 with the damper 328.

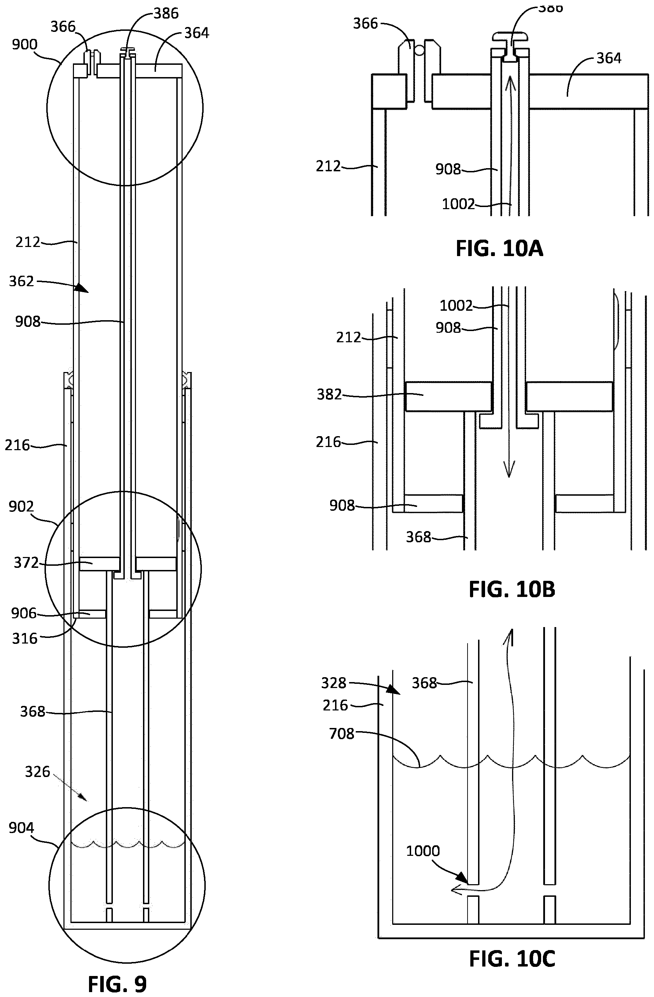

In other examples, the flow path between the inside of the second lower tube 216 and the second valve 386 can be defined differently. For example, FIG. 9 illustrates an example in which the air flow path is formed through a center sleeve. FIGS. 10A, 10B, and 10C are enlarged views of the callouts 900, 902, 904, respectively, of FIG. 9. In this example, the chamber 362 is formed by the interior of the second upper tube 212. In particular, the second shaft 368 extends through a sealhead 906 on the bottom end 316 of the second upper tube 212. The inside of the second upper tube 212 is sealed to form the spring chamber 362. The piston 372 is sealed against and slides up and down along the inner surface of the second upper tube 212. In the illustrated example, a center sleeve 908 is coupled to and extends downward from the second cap 364. The center sleeve 908 is sealingly engaged on an inner diameter of the piston 372. The piston 372 is slidable up and down along the center sleeve 908. The center sleeve 908 is in fluid communication with the inside of the second shaft 368. As shown in FIG. 10C, the second shaft 368 has one or more openings 1000, which allow air to flow between the inside of the second lower tube 216 and the inside of the second shaft 368. In the illustrated example the openings 1000 are below the oil level (labeled 708), but in other examples can be above the oil level. The second valve 386 is coupled to the second cap 364 at the top of the center sleeve 908. Air can flow along a flow path 1002 between the interior region 326 in the second lower tube 216 and the second valve 386. For example, assuming the interior region 326 is over-pressurized, when the second valve 386 is opened, air can flow from the interior region 326 in the second lower tube 216, through the second shaft 368, through the center sleeve, and through the valve 386 to the atmosphere. Conversely, if the interior region 326 is under-pressurized, air can flow from the atmosphere to the interior region 326 in the reverse direction. As such, the inside of the second shaft 368 and the center sleeve 908 form at least a portion of the flow path 1002. In this example, the second valve 386 can be located along or close to the center axis of the second leg 206, while the fill valve 366 is offset from the center axis. While the center sleeve 908 is shown in connection with the second leg 206, the first leg 204 with the damper 328 can similarly include a center sleeve to form a portion of the flow path.

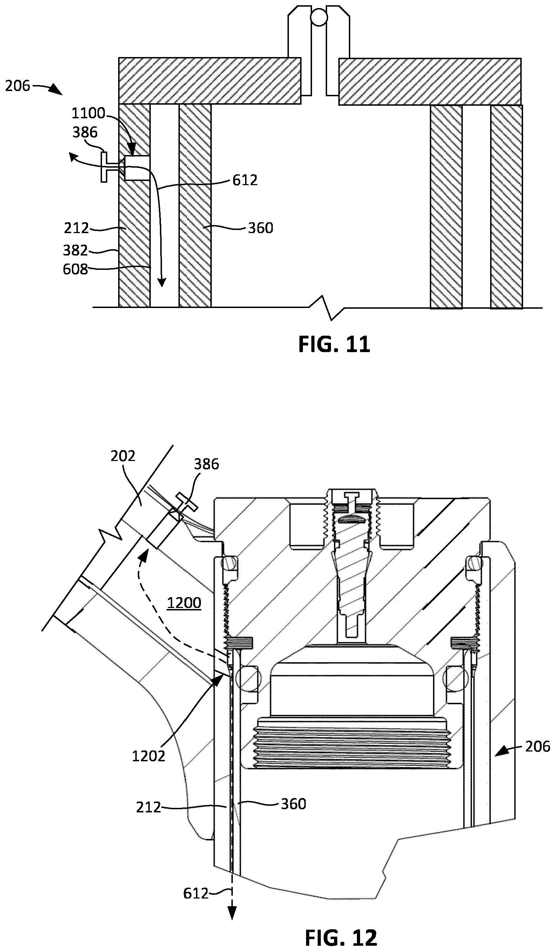

In some examples, the valve for equalizing the pressure in the lower tube can be on a side of the upper tube or crown. For example, FIG. 11 is a cross-sectional view of the top portion of the second leg 206. In this example, the second valve 386 is on a side of the second upper tube 212. In particular, the second upper tube 212 has a port or opening 1100 extending through the second upper tube 212 between the inner surface 608 and the outer surface 382. The second valve 386 is disposed in the opening 1100 and controls the flow of fluid through the opening 1100, between the atmosphere and the gap or space between the second upper tube 212 and the spring body 360. Therefore, when the second valve 386 is opened, fluid can flow along the air flow path 612 between the interior region 326 (FIG. 3) and the atmosphere to equalize or balance the pressure of the air in the second lower tube 216 (FIG. 3). In this example, the second valve 386 is disposed closer to the top end 314 of the second upper tube 212 so as not to interfere with the upward movement of the second lower tube 216 during compression. This valve placement can be similarly implemented on the first leg 204 with the damper 328.

As another example, the valve can be disposed on the crown 202. For example, FIG. 12 is an enlarged cross-sectional view of the upper portion of the second leg 206 and the crown 202 similar to FIG. 6. In this example, the second valve 386 is coupled to the crown 202. As shown in FIG. 12, the crown 202 has an interior chamber or cavity 1200. The second upper tube 212 has an opening 1202 that allows fluid communication between the interior cavity 1200 and the gap or space between the second upper tube 212 and the spring body 360. As such, the interior cavity 1200 is in fluid communication with the air in the second lower tube 216. The valve 386 controls the flow of fluid between the interior cavity 1200 and the atmosphere. When the second valve 386 is opened, fluid can flow along the air flow path 612 between the interior region 326 (FIG. 3) and the atmosphere to equalize or balance the pressure of the air in the second lower tube 216 (FIG. 3). In some examples, the first valve 384 for the first leg 204 can be similarly placed on the crown 202. In some examples, the interior cavity 1200 in the crown 202 may be in fluid communication with both legs 204, 206. As such, one valve can be used to equalize the pressure in both legs 204, 206 simultaneously. The single valve can be on the crown 202, one of the top caps 338, 364, or one of the upper tubes 210, 212.

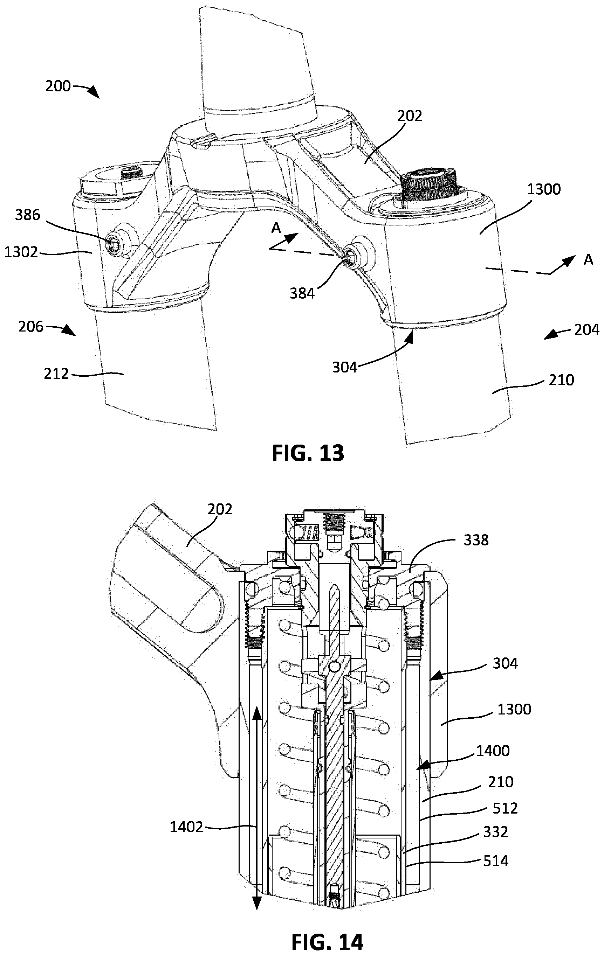

FIG. 13 is a perspective view of the front fork 200 showing another example in which the vent valve(s) is/are disposed on the crown 202. In the illustrated example, the first valve 384 is coupled the crown 202. In particular, in this example, the first valve 384 is located on a first sleeve or cylindrical portion 1300 of the crown 202 that defines the opening 304 that receives the first upper tube 210 of the first leg 204. When the first valve 384 is opened, the air in the lower portion of the first lower tube 214 (FIG. 2) is equalized with atmospheric pressure. In the illustrated example, the second valve 386 is similarly disposed on a second sleeve or cylindrical portion 1302 of the crown 202 that receives the second upper tube of the second leg 206. The second valve 386 operates substantially the same as the first valve 384 to equalizer pressure in the lower portion of the second lower tube 216 (FIG. 2). Therefore, details of the second valve 386 are not repeated herein. It is understood that any of the example aspects disclosed in connection with the first valve 384 can likewise apply to the second valve 386.

FIG. 14 is a cross-sectional view of the first cylindrical portion 1300 of the crown 202 and the upper portion of the first upper tube 210 taken along line A-A of FIG. 13. The first upper tube 210 is disposed in the opening 304 defined by the first cylindrical portion 1300 of the crown 202. The first cap 338 is threadably coupled to the first upper tube 210. Further, the damper body 332 is threadably coupled to and extends downward from the first cap 338. An annular gap or space 1400 is formed between the inner surface 512 of the first upper tube 210 and the outer surface 514 of the damper body 332. The annular gap 1400 forms a portion of a flow path 1402, which allows air in the interior region 312 (FIG. 3) in the first lower tube 214 (FIG. 3) to flow upward toward the first cap 338, and vice versa. In this example, the damper body 332 does not have a radial opening 516 as disclosed in conjunction with the example in FIG. 5.

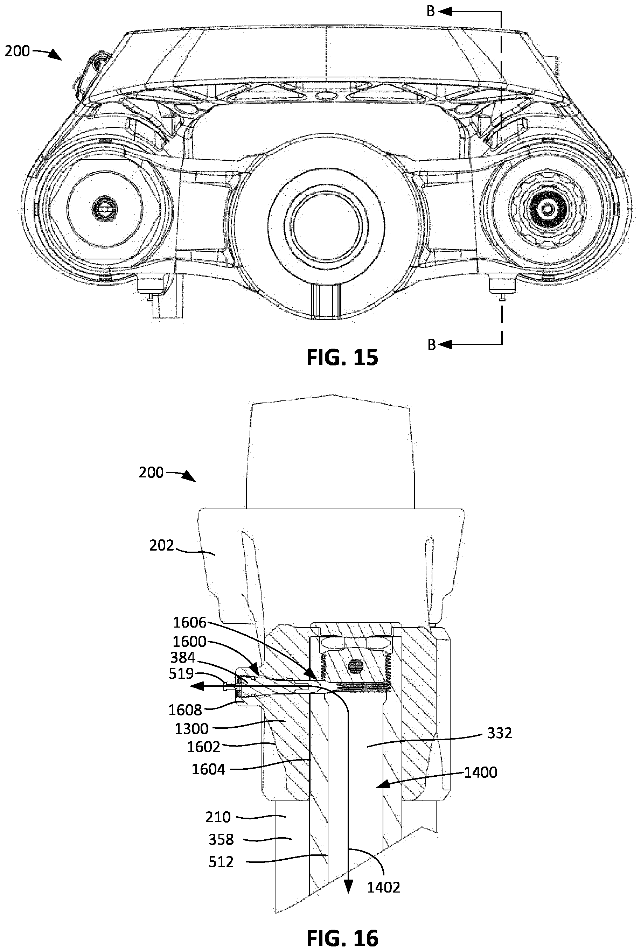

FIG. 15 is a top view of the example front fork 200 of FIG. 13. FIG. 16 is a cross-sectional taken through the first valve 384 along line B-B of FIG. 15. As shown in FIG. 16, the first cylindrical portion 1300 of the crown 202 has a first opening 1600 (e.g., a first valve port) extending between an outer surface 1602 and an inner surface 1604 of the first cylindrical portion 1300. The first upper tube 210 has a second opening 1606 (e.g., a second valve port) extending between the outer surface 358 and the inner surface 512 of the first upper tube 210. The first upper tube 210 is oriented such that the second opening 1606 in the first upper tube 210 is aligned with the first opening 1600 in the first cylindrical portion 1300 of the crown 202. As such, as shown in FIG. 16, the flow path 1402 is at least partially formed by the annular gap 1400 between the first upper tube 210 and the damper body 332, the second opening 1606 in the first upper tube 210, and the first opening 1600 in the first cylindrical portion 1300 of the crown 202. The first valve 384 is disposed in the first opening 1600 in the crown 202 and, thus, is disposed in the flow path 1402. In some examples, the first valve 384 is coupled to the crown 202 by threading or press-fitting the first valve 384 into the first opening 1600. When the first valve 384 is opened, such as by pushing on the stem 519, air can flow through the first valve 384 and along the flow path 1402 between the interior region 312 (FIG. 3) in the first lower tube 214 (FIG. 3) and the outside atmosphere, thereby equalizing the pressure in the interior region 312 int eh first lower tube 214.

The outer surface 358 of the first upper tube 210 and the inner surface 1604 of the first cylindrical portion 1300 of the crown 202 are tightly engaged to prevent air leakage between the upper tube 120 and the inner surface 1604 of the crown 202. For example, the first upper tube 210 and the opening 304 can be sized to form an interference fit (sometimes referred to as a press fit or friction fit). Additionally or alternatively, one or more seals (e.g., o-rings) can be installed between the surfaces 358, 1604 to ensure a fluid tight seal is formed.

In the illustrated example of FIG. 16, the outer surface 1602 of the crown 202 has a boss 1608 (e.g., a raised portion) around the opening 1600. The first valve 384 may have a certain length (e.g., 1 centimeter). The boss 1608 provides additional material or thickness in the wall of the crown 202 to accommodate the length of the first valve 384. The boss 1608 may be integrally formed with the crown 202 (e.g., machined or molded as a single part) or may be a separate component (e.g., a washer, a nut) that is coupled (e.g., welded) to the crown 202 at the first opening 1600. In other examples, the crown 202 may not have a boss at the first opening 1600.

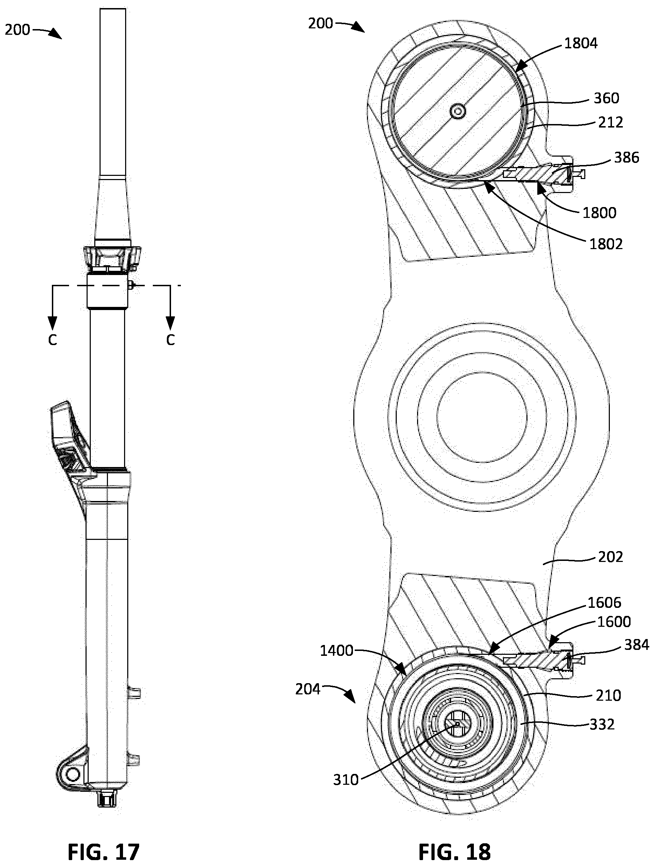

FIG. 17 is side view of the example front fork 200 of FIG. 13. FIG. 18 is a cross-sectional view of front fork 20 taken along line C-C in FIG. 17 showing a top-down view. FIG. 18 shows the first opening 1600 formed in the crown 202, the second opening 1606 formed in the first upper tube 210, and the annular gap 1400 between the first upper tube 210 and the damper body 332. The first opening 1600 is aligned with the second opening 1606 in a tangential direction relative to the central axis 310 of the first leg 204. Said another way, the first and second openings 1600, 1606 are aligned along an axis that is perpendicular to and offset from the central axis 310 of the first leg 204. The first valve 284 is disposed in the first opening 1600 and controls the flow of air along the flow path 1402 (FIGS. 14 and 16).

As shown in FIG. 18, the second valve 386 is similarly disposed in an opening 1800 that is formed in the crown 202 and aligned with an opening 1802 formed in the spring body 360. The opening 1802 is in fluid communication with a space or gap 1804 between the spring body 360 and the second upper tube 212. Therefore, a flow path is formed through the gap 1804, the opening 1802, and the opening 1800. When the second valve 386 is opened, the air in the lower portion of the second lower tube 216 (FIG. 2) is equalized with atmospheric pressure.

Therefore, disclosed herein are examples in which the valve is disposed at or near an interface of a top portion of the upper tube and the crown 202. For example, in connection with FIG. 5, the first valve 384 is coupled to the first cap 338 that is coupled to the first end 300 (top end) of the first upper tube 210. As another example, in connection with FIGS. 12-18, the valve 386 is coupled to the crown 202 near the top end of the second upper tube 212. As another example, in connection with FIG. 11, the second valve 386 is coupled to a side of the second upper tube 212. These locations enable a user or rider to more easily access the valve.

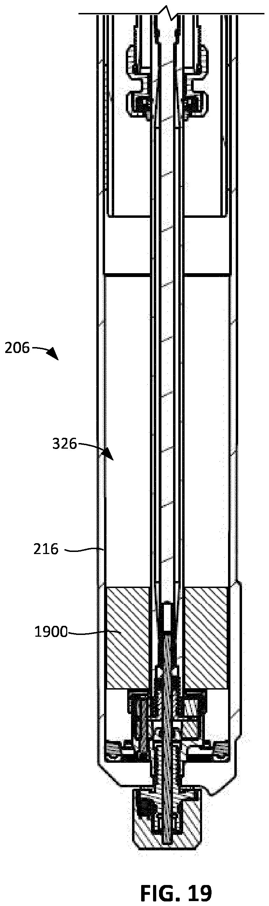

In some examples, the front fork 200 can include a volume spacer to consume or take up air volume in the lower casting volume to affect the casting ramp behavior. For example, FIG. 19 is a cross-sectional view of the second leg 206 including an example volume spacer 1900 in the interior region 326 in the second lower tube 216. In some examples, the volume spacer 1900 is a solid piece or hollow piece of material (e.g., plastic, polymer, metal) that consumes or takes up a portion of the volume in the second lower tube 216. This reduces the amount of air in the second lower tube 216 and, thus, changes effective spring rate to be more progressive (e.g., exhibit higher forces). In this example, the volume spacer 1900 is cylindrical in shape. In some examples, the volume spacer 1900 has a diameter of 30mm +/- 20mm, and a height of 30mm +/- 20mm. In other examples, the volume spacer 1900 can be larger or smaller and may be shaped differently. In some examples, multiple volume spacers can be stacked and/or nested together for greater heights. Multiple volume spacers can be mechanically interlocked with one another with threads or interference features.

In other examples, the volume spacer 1900 can act as a volume increaser to change the effective spring rate to be less progressive and therefore more linear (e.g., exhibit lower forces). For example, the volume spacer 1900 is constructed of activated carbon. Activated carbon has a relatively large surface area that causes gas molecules to adsorb to the material's surface (through van der Waals forces), which allows more gas molecules into a volume than would normally occupy that volume. As such, the activated carbon acts to increase the volume in the second lower tube 216, which can change the effective spring rate to be less progressive. A volume spacer (for consuming volume or increasing volume) can similarly be implemented in the first leg 204 of the front fork 200.

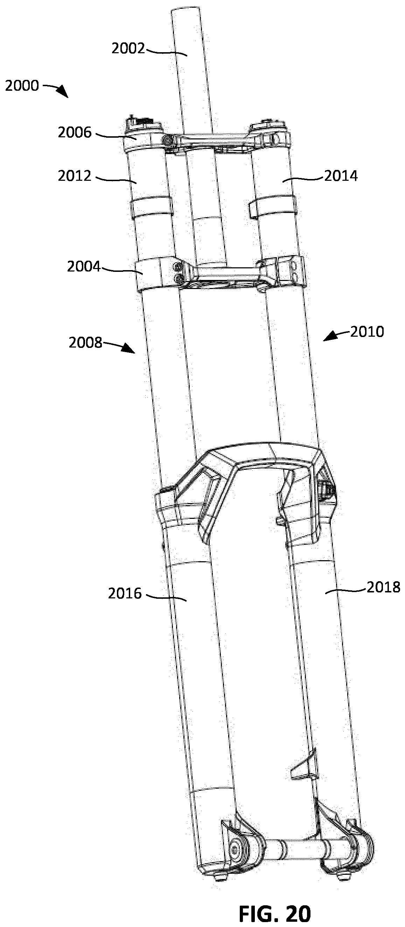

The example vent valves disclosed herein can also be implemented in connection with other types of forks or suspension components. For example, FIG. 20 shows an example front fork 2000 that includes a steerer tube 2002, a crown 2004, an upper clamp 2006, and first and second legs 2008, 2010 with upper tubes 2012, 2014 (also referred to as an upper) and lower tubes 2016, 2018 (also referred to as a lower). The crown 2004 is coupled to the upper tubes 2012, 2014 and to the steerer tube 2002. The upper clamp 2006 is above the crown 2004 and is also coupled to the upper tubes 2012, 2014 and the steerer tube 2002. This configuration is often referred to as a double clamp or a triple clamp fork and is advantageous for more significant. Any of the example valve designs disclosed herein can similarly be implemented in connection with the front fork 2000 of FIG. 20.

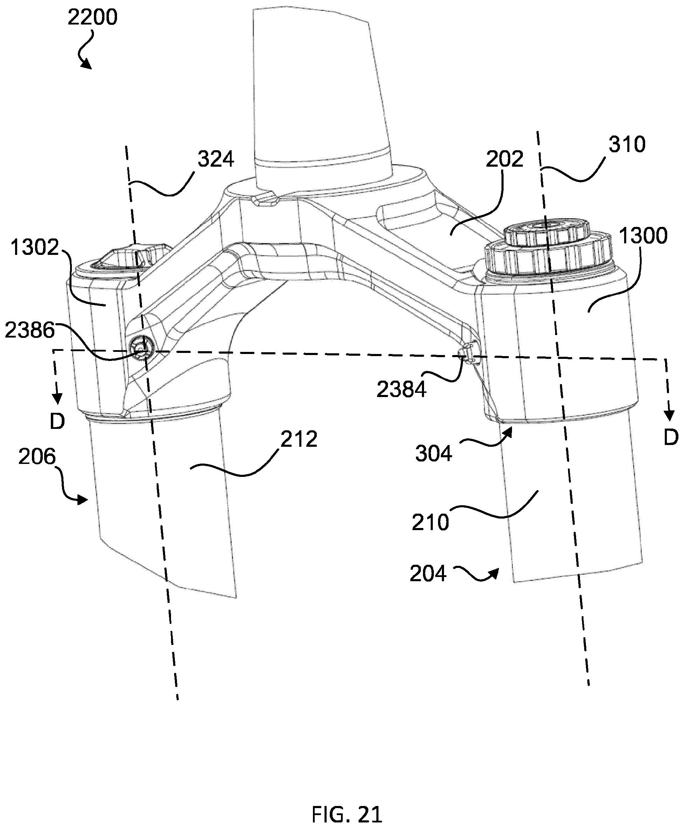

Turning now to FIG. 21, a perspective view of a front fork 2200 is provided showing another example in which the vent valve(s) is/are disposed on the crown 202. In the illustrated example, a first valve 2384 is coupled the crown 202. In particular, in this example, the first valve 2384 is located on the first sleeve or cylindrical portion 1300 of the crown 202 that defines the opening 304 that receives the first upper tube 210 of the first leg 204. When the first valve 2384 is opened, the air in the lower portion of the first lower tube 214 (FIG. 2) is equalized with atmospheric pressure. In the illustrated example, a second valve 2386 is similarly disposed on the second sleeve or cylindrical portion 1302 of the crown 202 that receives the second upper tube of the second leg 206. The second valve 2386 operates substantially the same as the first valve 2384 to equalizer pressure in the lower portion of the second lower tube 216 (FIG. 2). Therefore, details of the second valve 2386 are not repeated herein. It is understood that any of the example aspects disclosed in connection with the first valve 2384 can likewise apply to the second valve 2386. As shown in the example of FIG. 21, the first valve may be disposed on the first sleeve 1300 facing the first upper tube 210, for example along an actuation axis (not shown) perpendicular to the central axis 310 of the first upper tube 210.

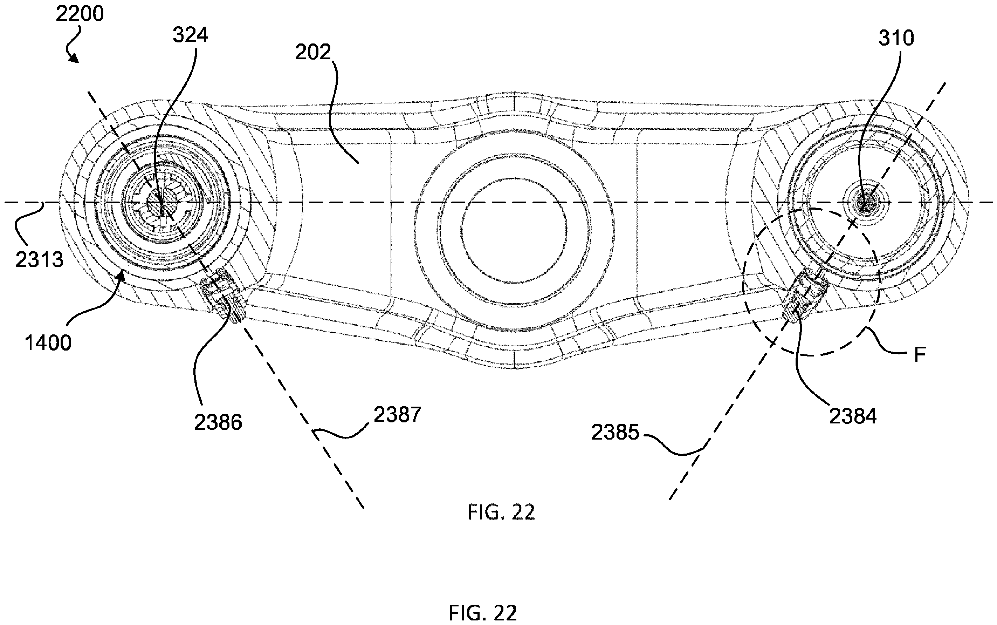

FIG. 22 is a cross-sectional view taken through the first valve 2384 and the second valve 2386 along line D-D of FIG. 21. As shown in FIG. 22, a fork plane 2313 may be defined between and including the central axes 310, 324 of the first leg 204 and the second leg 206. The first valve 2384 defines a first valve actuation axis 2385 and the second valve 2386 defines a second valve actuation axis 2387. The first valve 2384 is operable along the first valve actuation axis 2385 and the second valve is operable along the second valve actuation axis 2387. As shown in FIG. 22, the first valve actuation axis 2385 and the second valve actuation axis 2387 may be non-parallel. In some embodiments, the first valve actuation axis 2385 and the second valve actuation axis 2387 may be perpendicular or substantially perpendicular. The first valve actuation axis 2385 and the second valve actuation axis 2387 as shown in FIG. 22 each define an acute angle with the fork plane 2313. It should be appreciated that the angle defined with the fork plane 2313 may provide shielding and/or ergonomic access for the first and second valves 2384, 2386 as will be described in greater detail below.

FIG. 22 also shows that the first valve actuation axis 2385 may intersect with the first central axis 310 and the second valve actuation axis 2387 may intersect with the second central axis 324. For example, the first valve actuation axis 2385 may be orthogonal, for example perpendicular with the first central axis 310 and/or the second valve actuation axis 2387 may be orthogonal, for example perpendicular with the second central axis 324

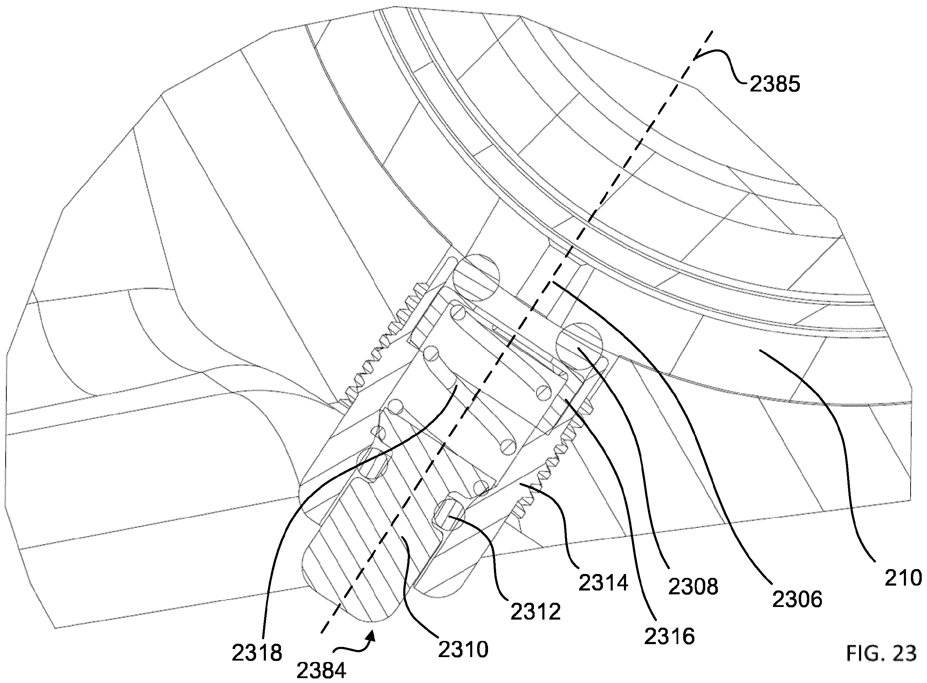

FIG. 23 is an enlarged view of the example front fork 2200 of FIG. 21 shown at call-out F in FIG. 22. As shown in FIG. 23, the first valve 2384 is operable along the first valve actuation axis 2385 via a valve actuator 2310. The valve actuator 2310 controls a valve seal 2312. As will be described in greater detail below, actuation of the valve actuator 2310 may be used to control flow past the valve seal 2312. For example, pushing or pulling operation of the valve actuator may remove the valve seal 2312 from sealing contact with a valve body 2314. The valve body 2314 may be attached, for example threadedly attached with the first upper tube 210. A valve assembly seal 2308 may be provided to seal the first valve 2384 with the first upper tube 210. As shown in FIG. 23, an opening 2306 may be provided in the first upper tube 2310 for communication to the first valve 2384.

The first valve 2384 may be biased and/or automatically sealing. For example, as shown in FIG. 23, a valve spring 2318 may be provided to bias the first valve 2384 closed to a sealed position as shown in FIG. 23. The valve spring 2318 may be supported between the valve actuator 2310 and another component, for example the first upper tube 210 and/or a valve retainer 2316 as shown. Operation of the first valve 2384 may thus be controlled by the valve spring 2318 such that a sufficient force by a user can overcome the force of the valve spring 2318, which in the absence of such actuation force will automatically return to its sealed closed position.

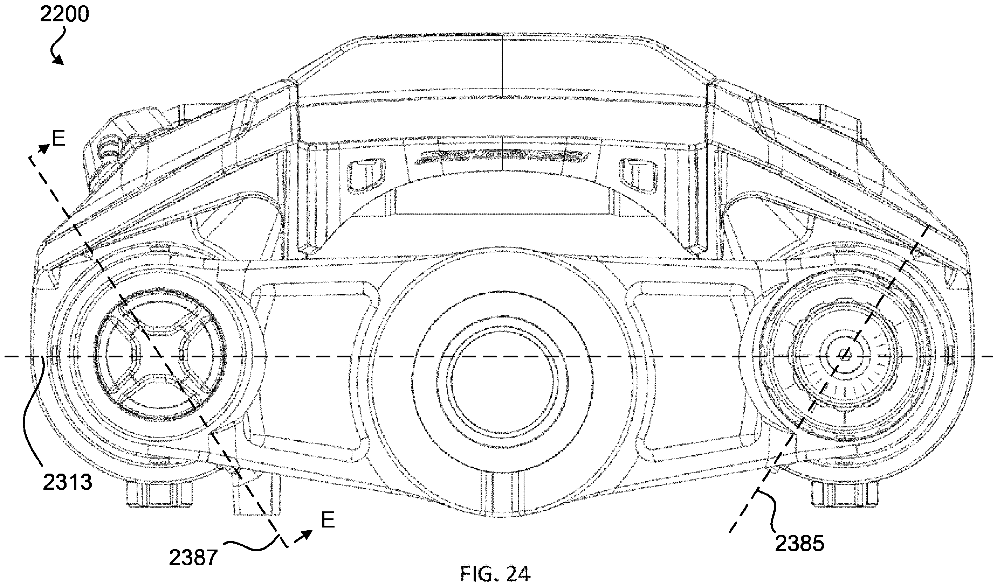

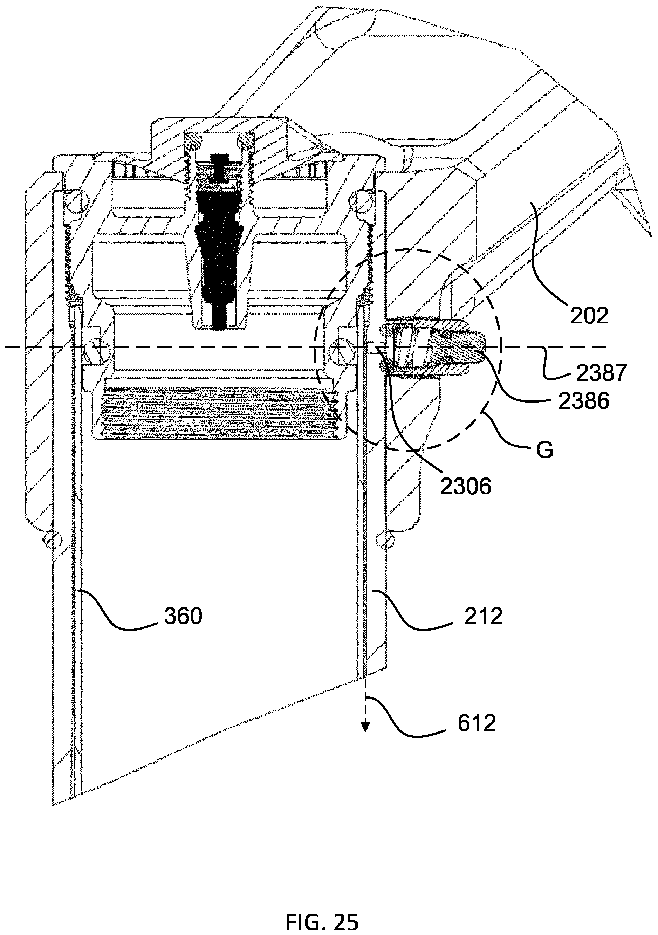

FIG. 24 is a top view of the example front fork 2200 of FIG. 21. FIG. 25 is a cross-sectional view taken through the second valve actuation axis 2387 along line E-E of FIG. 24. As shown in FIG. 25, the crown 202 retains the second valve 2386 such that the second valve 2386 is in communication with an opening 2306 in the second upper tube 212. Communication across the second valve 2386 may thus travel along a flow path 612 defined between the second upper tube 212 and the spring body 360 as described elsewhere herein. It should be appreciated that the second valve 2386 and other valves described herein may be used in various examples with any of the physical arrangements and flow paths described herein.

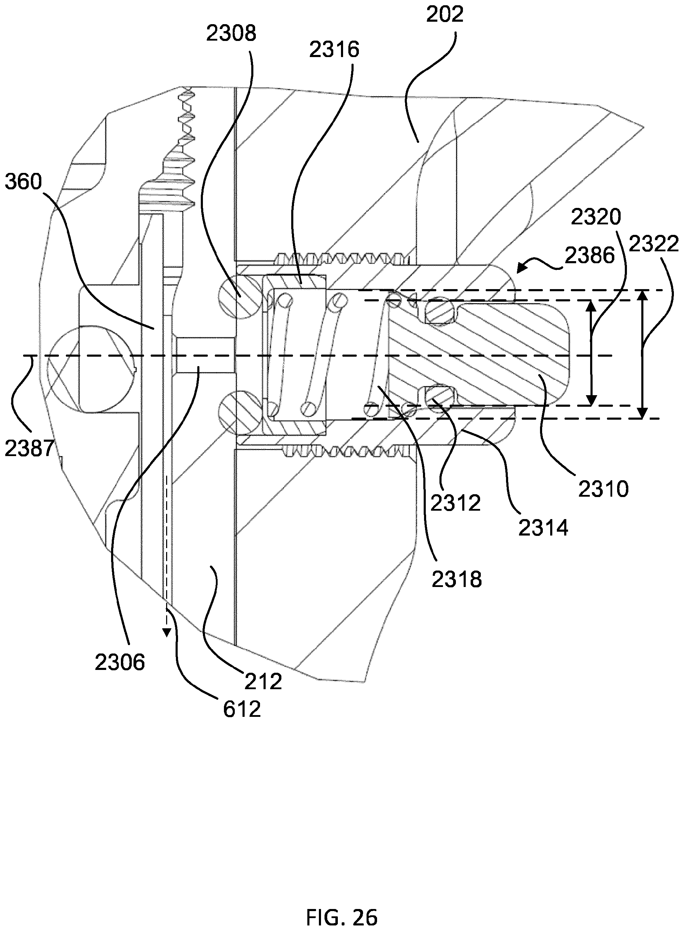

FIG. 26 is an enlarged view of the example front fork 2200 of FIG. 21 shown at call-out G in FIG. 25. The second valve 2386 may be configured as generally described elsewhere herein with reference to other valves. For example, as shown in FIG. 26, the second valve 2386 may use similar or the same elements as the first valve 2384, for example so as to be interchangeable with one another. Also shown in FIG. 26, the second valve 2386 may define various dimensions. For example, a valve first dimension 2320 and a valve second dimension 2322 are shown in FIG. 26. The valve first dimension 2320 and the valve second dimension 2322 represent diameters in a generally circular valve along the second valve axis 2387 but may refer to various dimensions describing the selective sealing arrangement described herein. The valve first dimension 2320 as shown represents a sealing diameter of the valve seal 2312, also corresponding to an inner dimension of the valve body 2314. In the closed sealed state shown in FIG. 26, the valve seal 2312 forms a seal with the valve body 2314 at the valve first dimension 2320. If the valve actuator 2310 is operated, the valve seal 2312 may no longer contact the valve body 2314, for example as the valve seal 2312 moves into alignment with the valve second dimension 2322. The valve second dimension 2322 is greater than the valve first dimension 2320 so as to facilitate communication across the valve seal 2312. As shown in FIG. 26, the valve second dimension 2322 is greater than a corresponding dimension of the opening 2306 in the in second upper tube 212, and the valve first dimension 2320 may also be greater than this corresponding dimension of the opening 2306.

The example valve designs disclosed herein have been described in connection with right side up forks, which have the larger diameter tube on the bottom and the smaller diameter tube is on the top. However, it is understood that any of the example valve designs disclosed herein can also be implemented on inverted fork designs, which have the larger diameter tube on the top and the smaller diameter tube on the bottom.

Example front forks for bicycles have been disclosed herein. The following paragraphs provide various examples and example combinations of the examples disclosed herein.

Example 1 is a front fork for a bicycle, the front fork comprising a leg including an upper tube and a lower tube, the upper tube and the lower tube configured in a telescopic arrangement, the upper tube and the lower tube defining an interior region that is sealed and contains a volume of air in the lower tube; and a valve disposed in a flow path at or near a top end of the upper tube, wherein the flow path is formed between the volume of air in the lower tube and the valve such that when the valve is opened, pressure in the lower tube is equalized with atmospheric pressure.

Example 2 includes the front fork of Example 1, further including a crown, wherein a top portion of the upper tube is coupled to the crown, and wherein the valve is disposed at or near an interface of the top portion of the upper tube and the crown.

Example 3 includes the front fork of Examples 1 or 2, further including a cap coupled to the top end of the upper tube, the valve coupled to the cap.

Example 4 includes the front fork of Example 3, wherein the valve is offset from a central axis of the leg.

Example 5 includes the front fork of Example 2, wherein the valve is coupled to the crown.

Example 6 includes the front fork of Example 5, wherein the upper tube is disposed in a cylindrical portion of the crown, wherein the cylindrical portion has a first opening extending between an outer surface and an inner surface of the cylindrical portion, and wherein the valve is disposed in the first opening.

Example 7 includes the front fork of Example 6, wherein the upper tube has a second opening extending between an outer surface and an inner surface of the upper tube, the second opening being aligned with the first opening, wherein the flow path is at least partially formed by the first opening and the second opening.

Example 8 includes the front fork of Example 1, wherein the valve is on a side of the upper tube.

Example 9 includes the front fork of any of Examples 1-8, wherein the valve is a manually operated valve.

Example 10 includes the front fork of any of Examples 1-9, further including a damper in the leg, the damper including: a damper body defining a chamber, the damper body disposed in and coupled to the upper tube; a shaft coupled to a bottom end of the lower tube, the shaft extending into the chamber in the damper body; and a damper member in the chamber and coupled to the shaft, wherein an outer diameter of the damper body is less than an inner diameter of the upper tube, and wherein the flow path is at least partially formed by a gap or space between the damper body and the upper tube.

Example 11 includes the front fork of Example 10, wherein the damper body has a portion with a radial opening, wherein the flow path is at least partially formed by the portion and the radial opening.

Example 12 includes the front fork of any of Examples 1-11, further including a spring in the leg, the spring including: a spring body defining a chamber, the spring body disposed in and coupled to the upper tube; a shaft coupled to a bottom end of the lower tube, the shaft extending into the chamber in the spring body; and a piston in the chamber and coupled to the shaft.

Example 13 includes the front fork of Example 12, wherein an outer diameter of the spring body is less than an inner diameter of the upper tube, wherein the flow path is at least partially formed by a gap or space between the spring body and the upper tube.

Example 14 includes the front fork of Examples 12 or 13, further including a cap coupled to the top end of the upper tube and a center sleeve coupled to the cap, the valve coupled to the center sleeve, the center sleeve extending through the piston such that the center sleeve is in fluid communication with an inside of the shaft, and wherein an inside of the shaft and the center sleeve form at least a portion of the flow path.

Example 15 includes the front fork of any of Examples 1-14, wherein the leg is a first leg, the upper tube is a first upper tube, the lower tube is a first lower tube, and the valve is a first valve, the front fork further including: a second leg including a second upper tube and a second lower tube, the second upper tube inserted into the second lower tube and configured in a telescopic arrangement, the second upper tube and second lower tube defining an interior region that is sealed and contains a volume of air in the lower tube; and a second valve coupled to the second upper tube at or near a top end of the second upper tube, wherein a flow path is formed between the volume of air in the second lower tube and the second valve, such that when the second valve is opened, pressure in the second lower tube is equalized with atmospheric pressure.

Example 16 includes the front fork of Example 15, further including: a first cap coupled to the top end of the first upper tube, the first valve integrated into the first cap; and a second cap coupled to the top end of the second upper tube, the second valve integrated into the second cap.

Example 17 includes the front fork of any of Examples 1-16, further including a volume spacer in the interior region of the lower tube, wherein the volume spacer is constructed of activated carbon.

Example 18 is a front fork for a bicycle, the front fork comprising: a crown having a top side and a bottom side opposite the top side; a steerer tube coupled to the crown and extending outward from the top side; a leg coupled to the crown and extending outward from the bottom side, the leg including an upper tube and a lower tube, the upper tube coupled to the crown, the upper tube extending into a top end of the lower tube, the upper tube and second lower tube defining an interior region that is sealed and contains a volume of air in the lower tube; and a valve to equalize pressure of the volume of air in the lower tube with atmospheric pressure when the valve is opened, the valve having a manually operable portion that is above the top end of the lower tube in an orientation in which the upper tube is above the lower tube.

Example 19 includes the front fork of Example 18, wherein the valve is integrated into a cap coupled to a top end of the upper tube.

Example 20 includes the front fork of Example 18, wherein the valve is on a side of the upper tube.

Example 21 includes the front fork of Example 18, wherein the valve is on the crown.

Example 22 includes the front fork of any of Examples 18-21, wherein the valve is a poppet valve.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A front fork for a bicycle, the front fork comprising:
a leg including an upper tube and a lower tube, the upper tube and the lower tube configured in a telescopic arrangement with the upper tube fitting into an interior space of the lower tube, the upper tube and the lower tube defining an interior region that is sealed and contains a volume of air in the lower tube; and
a valve disposed in a flow path at or near a top end of the upper tube,
wherein the flow path is formed between the volume of air in the lower tube and the valve such that when the valve is opened, pressure in the lower tube is equalized with atmospheric pressure.

2. The front fork of claim 1, further including a crown, wherein a top portion of the upper tube is coupled to the crown, and wherein the valve is disposed at or near an interface of the top portion of the upper tube and the crown.

3. The front fork of claim 1 or 2, further including a cap coupled to the top end of the upper tube, the valve coupled to the cap.

4. The front fork of any one of claims 1 to 3, wherein the valve is offset from a central axis of the leg.

5. The front fork of at least claim 2, wherein the valve is coupled to the crown; wherein, optionally, the upper tube is disposed in a cylindrical portion of the crown, wherein the cylindrical portion has a first opening extending between an outer surface and an inner surface of the cylindrical portion, and wherein the valve is disposed in the first opening, wherein, further optionally, the upper tube has a second opening extending between an outer surface and an inner surface of the upper tube, the second opening being aligned with the first opening, wherein the flow path is at least partially formed by the first opening and the second opening.

6. The front fork of any one of claims 1 to 5, wherein the valve is on a side of the upper tube and/or wherein the valve is a manually operated valve.

7. The front fork of any one of claims 1 to 6, further including a damper in the leg, the damper including:
a damper body defining a chamber, the damper body disposed in and coupled to the upper tube;
a shaft coupled to a bottom end of the lower tube, the shaft extending into the chamber in the damper body; and
a damper member in the chamber and coupled to the shaft, wherein an outer diameter of the damper body is less than an inner diameter of the upper tube, and wherein the flow path is at least partially formed by a gap or space between the damper body and the upper tube; wherein, optionally, the damper body has a portion with a radial opening, wherein the flow path is at least partially formed by the portion and the radial opening.

8. The front fork of any one of claims 1 to 7, further including a spring in the leg, the spring including:
a spring body defining a chamber, the spring body disposed in and coupled to the upper tube;
a shaft coupled to a bottom end of the lower tube, the shaft extending into the chamber in the spring body; and
a piston in the chamber and coupled to the shaft.

9. The front fork of claim 8, wherein an outer diameter of the spring body is less than an inner diameter of the upper tube, wherein the flow path is at least partially formed by a gap or space between the spring body and the upper tube.

10. The front fork of claim 8 or 9, further including a cap coupled to the top end of the upper tube and a center sleeve coupled to the cap, the valve coupled to the center sleeve, the center sleeve extending through the piston such that the center sleeve is in fluid communication with an inside of the shaft, and wherein an inside of the shaft and the center sleeve form at least a portion of the flow path.

11. The front fork of any one of claims 1 to 10, wherein the leg is a first leg, the upper tube is a first upper tube, the lower tube is a first lower tube, and the valve is a first valve, the front fork further including:
a second leg including a second upper tube and a second lower tube, the second upper tube inserted into the second lower tube and configured in a telescopic arrangement, the second upper tube and second lower tube defining an interior region that is sealed and contains a volume of air in the lower tube; and
a second valve coupled to the second upper tube at or near a top end of the second upper tube, wherein a flow path is formed between the volume of air in the second lower tube and the second valve, such that when the second valve is opened, pressure in the second lower tube is equalized with atmospheric pressure; wherein the front fork optionally further includes:
a first cap coupled to the top end of the first upper tube, the first valve integrated into the first cap; and
a second cap coupled to the top end of the second upper tube, the second valve integrated into the second cap.

12. The front fork of any one of claims 1 to 11, further including a volume spacer in the interior region of the lower tube, and wherein the volume spacer is constructed of activated carbon.

13. A front fork for a bicycle, the front fork comprising:
a crown having a top side and a bottom side opposite the top side;
a steerer tube coupled to the crown and extending outward from the top side;
a leg coupled to the crown and extending outward from the bottom side, the leg including an upper tube and a lower tube, the upper tube coupled to the crown, the upper tube extending into a top end of the lower tube, the upper tube and second lower tube defining an interior region that is sealed and contains a volume of air in the lower tube; and
a valve to equalize pressure of the volume of air in the lower tube with atmospheric pressure when the valve is opened, the valve having a manually operable portion that is above the top end of the lower tube in an orientation in which the upper tube is above the lower tube.

14. The front fork of claim 13, wherein the valve is integrated into a cap coupled to a top end of the upper tube and/or wherein the valve is on a side of the upper tube.

15. The front fork of claim 13 or 14, wherein the valve is on the crown and/or wherein the valve is a poppet valve.
